# EUROPEAN PATENT SPECIFICATION

(11) **EP 1 813 429 B1**
(45) Date of publication and mention of the grant of the patent: **28.04.2010**
(21) Application number: 07001030.1
(22) Date of filing: 18.01.2007
(51) Int. Cl.: B41J 2/325

(54) **Image forming method and image forming apparatus**
Verfahren und Vorrichtung zur Bilderzeugung
Procédé et appareil de formation d'image

(30) Priority: 31.01.2006 JP 2006022869
(43) Date of publication of application: 01.08.2007
(73) Proprietor: KABUSHIKI KAISHA TOSHIBA, Tokyo 105-8001 (JP)
(72) Inventor: Miki, Takeo, Minato-ku Tokyo 105-8001 (JP); Misumi, Yoshinori, Minato-ku Tokyo 105-8001 (JP)
(74) Representative: HOFFMANN EITLE

(56) References cited:
- EP-A- 0 450 218
- EP-A- 1 667 425
- JP-A- 8 179 607
- JP-A- 2002 283 598

## Description

The present invention relates to an image forming method and an image forming apparatus, both employing an intermediate transfer-recording system. More particularly, the invention relates to an image forming method and an image forming apparatus, which are designed to form high-quality portraits for personal IDs, binary images (e.g., characters) or anti-forging images on media such as cards and brochure pages.

Known as such an image forming method is the intermediate transfer-recording method. In this method, a thermal heat transfers ink from an ink ribbon to an intermediate transfer-recording medium, thus forming an image on the medium. This image is transferred from the medium to a final transfer-recording medium such as a card or a brochure page. In the intermediate transfer-recording method, any image is first formed on the intermediate transfer-recording medium having an image-receiving layer, unlike in the method that forms an image directly on the final recording medium. Therefore, the intermediate transfer-recording method can form a stable image, regardless of the condition of the transfer-recording surface of the final recording medium.

In the thermal transfer recording system using a thermal head, dust, for example, may exist between the image-receiving layer of the intermediate transfer-recording medium and the ink ribbon or between the thermal head and the ink ribbon. In this case, some color dots cannot be transferred to the recording medium, inevitably forming an image having no desired color.

After transferred to the final recording medium, such an image is visually examined for defects. If the image has defects that are too prominent, the final recording medium is discarded, and the same image is transferred from the intermediate transfer-recording medium to a new final recording medium such as a card or a brochure page. In recent years, various sophisticated measures have been taken to prevent forgery on the final recording media thus discarded, such as cards and brochure pages. Further, relatively expensive final recording media have come into use in increasing numbers, each incorporating an IC chips, typically a radio IC chip. In view of these facts, the discarding of the cards and brochure pages, because of the above-mentioned defective images, makes a great economic loss.

A technique is known, which may avoid such an economic loss (see, for example, Jpn. Pat. Appln. KOKAI Publication No. 2002-283598). This technique is to compare an image formed on an intermediate transfer-recording medium with the original image represented by image data, before the image transferred to a final recording medium, determining whether the image is defective or not. In accordance with whether the image is defective, it is then determined whether the image should be transferred to the final recording medium.

The technique can prevent an image from being transferred to a final recording medium if the image has been found to be defective. Hence, final recording media will not be wasted, thus avoiding the above-mentioned economic loss.

However, the accuracy of determining whether an image is defective is low. This is because the image formed on an intermediate transfer-recording medium is compared with only the original image represented by image data, and the amount of data used in determining the defectiveness of the image is inevitably too small.

The technique described above uses an inspection algorithm. The algorithm is so described that an image, such as a person's portrait, for example, is inspected in accordance with the contour of the face or the binary-image area thereof. It is therefore difficult to detect defects in the pixels that constitute the image. The algorithm cannot help to accomplish the inspection at a desirable precision.

An object of the present invention is to provide an image forming method and an image forming apparatus, which can reliably inspect an image printed on an intermediate transfer-recording medium, in units of pixels, for any defects that the image may have, and which can avoid discarding of a final recording medium, thus helping to reduce the printing cost.

To achieve the object, an image forming method according to the present invention comprises: a printing step of printing at least two identical images on two regions of an intermediate transfer-recording medium, respectively, by using image data representing an image to be transferred to a final transfer-recording medium; an inspecting step of inspecting the images printed on the intermediate transfer-recording medium in the printing step, by reading and comparing the images, thereby to determine whether the images have defects; and a transferring step of transferring an image found to have no defects in the inspecting step, from the intermediate transfer-recording medium to the final transfer-recording medium.

Another image forming method according to the present invention comprises: a printing step of printing at least two identical images on two regions of an intermediate transfer-recording medium, respectively, by using image data representing an image to be transferred to a final transfer-recording medium; a first inspecting step of inspecting the two images printed on the intermediate transfer-recording medium in the printing step, by reading the images from the intermediate transfer-recording medium and comparing the images, thereby to determine whether the images have defects; a second inspecting step of comparing the images to determine whether the images have defects, by comparing the two images read from the intermediate transfer-recording medium in the first inspecting step, with an image represented by the image data, thereby to determine whether the tow images have defects, in the case where at least one image is found to have no defects in the first inspecting step; an extra printing step of printing at lease two identical images, by using the image data, on another region of the intermediate transfer-recording medium, in the case where the two images are found to have defects in the second inspecting step; a third inspecting step of reading and comparing the two images printed on the intermediate transfer-recording medium in the extra printing step, thereby to determine whether the images have defects; a fourth inspecting step of comparing the two images read from the intermediate transfer-recording medium in the third inspecting step, with the image represented by the image data, in the case where at lease one image is found to have no defects in the third inspecting step, and then comparing the two images read from the intermediate transfer-recording medium in the first inspecting step, with the two images read from the intermediate transfer-recording medium in the third inspecting step, thereby to determine whether the two images read in the third inspecting step have detects; and a transferring step of transferring an image found to have no defects in the fourth inspecting step, from the intermediate transfer-recording medium to the final transfer-recording medium.

According to another aspect of the present invention there is provided an image forming apparatus characterized by comprising: printing means adapted to print at least two identical images on an intermediate transfer-recording medium, by using image data representing an image to be transferred to a final transfer-recording medium; inspecting means for inspecting the at least two identical images printed on the intermediate transfer-recording medium by the printing means, by.reading and comparing the at least two identical images thereby to determine whether the images have defects; and transferring means for transferring an image found to have no defects by the inspecting means, from the intermediate transfer-recording medium to the final transfer-recording medium.

The invention can be more fully understood from the following detailed description when taken in conjunction with the accompanying drawings, in which:
FIG. 1 is a diagram showing an image forming apparatus according to a first embodiment of the present invention;
FIG. 2 is a block diagram showing the control system provided in the image forming apparatus of FIG. 1;
FIG. 3 is a block diagram showing the inspection unit shown in FIG. 2;
FIG. 4 is a schematic view of an intermediate transfer-recording medium on which an image is printed;
FIG. 5 is a block diagram showing the configuration of an inspection unit for use in image forming apparatuses according to second and third embodiments of the invention;
FIG. 6 is a flowchart explaining how the image forming apparatus according to the second embodiment operates; and
FIG. 7 is a flowchart explaining how the image forming apparatus according to the third embodiment operates.

Embodiments of the present invention will be described, with reference to the accompanying drawings.

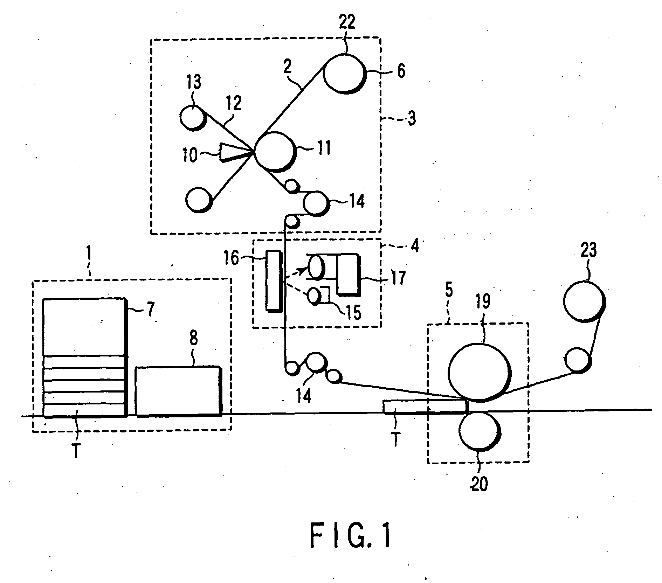

The first embodiment will be described. FIG. 1 schematically shows an image forming apparatus according to the first embodiment. The image forming apparatus has a medium-feeding unit 1, a printing unit 3 (printing means), an inspection unit 4 (inspecting means), a transfer unit 5 (transferring means), and a medium-feeing unit 6. The medium-feeding unit 1 feeds recording media (final recording media) such as brochures T. The printing unit 3 prints images on an intermediate transfer-recording medium 2 that is a transparent or light-colored band. The inspection unit 4 inspects the images printed on the intermediate transfer-recording media 2 to determine whether the image is defective or not. The transfer unit 5 transfers an image from the intermediate transfer-recording media 2 to a brochure T. The medium-feeing unit 6 feeds the intermediate transfer-recording medium 2, guiding the medium 2 through the printing unit 3, inspection unit 4 and transfer unit 5.

The medium-feeding unit 1 comprises a hopper 7 and a page-turning mechanism 8. The hopper 7 holds a stack of brochures T. The brochures T are fed from the hopper 7, one by one, to the page-turning mechanism 8. The page-turning mechanism 8 turns the pages of the brochure T fed from the hopper 7.

The printing unit 3 comprises a thermal head 10, a platen roller 11, and a drive mechanism unit 13. The platen roller 11 is spaced from, and opposed to, the thermal head 10. The drive mechanism unit 13 runs an ink ribbon 12, through a gap between the thermal head 10 and the platen roller 11.

The inspection unit 4 comprises a light source 15, a reflector 16, and a CCD-type sensor 17. The light source 15 applies light to the intermediate transfer-recording medium 2. The reflector 16 reflects the light coming through the intermediate transfer-recording medium 2. The CCD-type sensor 17 receives the light reflected by the reflector 16. The light source 15 can emit light beams of different wavelengths, depending on the type of the ink contained in the ink ribbon 12. Assume that the ink contains, for example, ultraviolet-ray-excitable phosphor. Then, the light source 15 emits ultraviolet rays.

The transfer unit 5 comprises a heat roller 19 and a backup roller 20. The heat roller 19 presses a brochure T to the transfer-recording medium 2. The backup roller 20 supports the brochure T the heat roller 19 is pressing.

The medium-feeing unit 6, which feeds the intermediate transfer-recording medium 2, guiding the medium 2 through the printing unit 3, inspection unit 4 and transfer unit 5, comprises a feed roller 22, a take-up roller 23 and two medium-slackening mechanisms 14. The feed roller 22 feeds the intermediate transfer-recording medium 2. The take-up roller 23 takes up the medium 2. The medium-slackening mechanisms 14 are designed to slacken the intermediate transfer-recording medium 2 running from the feed roller 22 to the take-up roller 23.

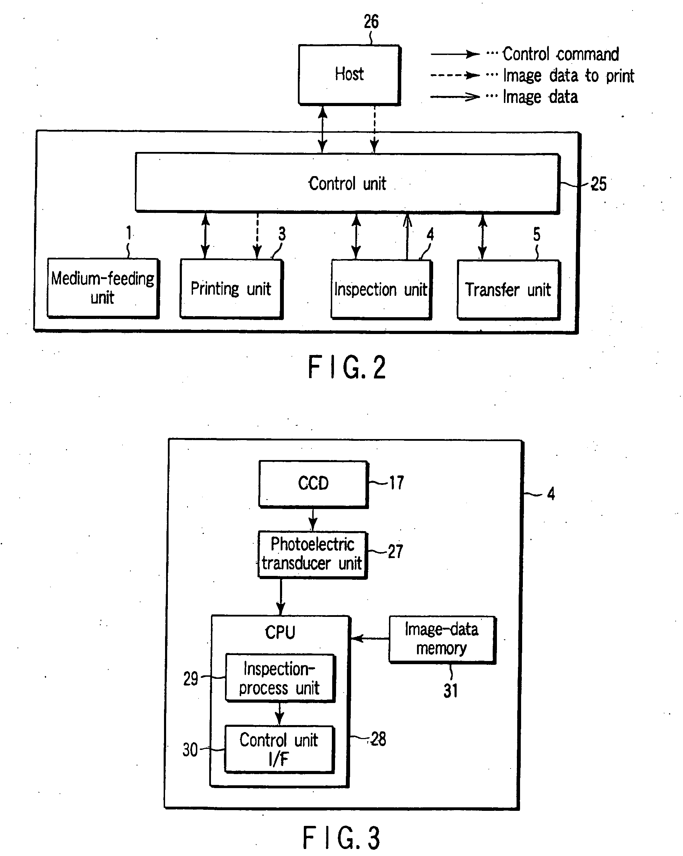

FIG. 2 is a block diagram of the control system provided in the image forming apparatus so configured as described above. As FIG. 2 shows, the printing unit 3, inspection unit 4 and transfer unit 5 are connected to a control unit 25 (control means), which in turn is connected to a host computer 26. Text data (e.g., personal data) and portrait data are transmitted from the host computer 26 to the printing unit 3 via the control unit 25. The printing unit 3 prints the images represented by the data items, on the intermediate transfer-recording medium 2. The inspection unit 4 inspects the images for any defects and generates data showing the results of inspection. This data is transmitted to the control unit 25. The control unit 25 controls the transfer unit 5 in accordance with the results of inspection.

As FIG. 3 shows, the inspection unit 4 has a photoelectric transducer unit 27, a central processing unit (CPU) 28, and an image-data memory 31, in addition to the CCD-type sensor 17. The photoelectric transducer unit 27 is connected to the sensor 17. The CPU 28 has an inspection-process unit 29 and is connected to the control unit 25 by a control-unit interface (I/F) 30. The image-data memory 31 is connected to the CPU 28. The inspection-process unit 29 compares, for example, the reference image data stored in the memory 31 with the image data generated by the transducer unit 27 and representing, for example, a portrait. Thus, the unit 29 determines whether the image detected by the CCD-type sensor 17 is defective or not.

How the image forming apparatus so configured as described above operates will be explained.

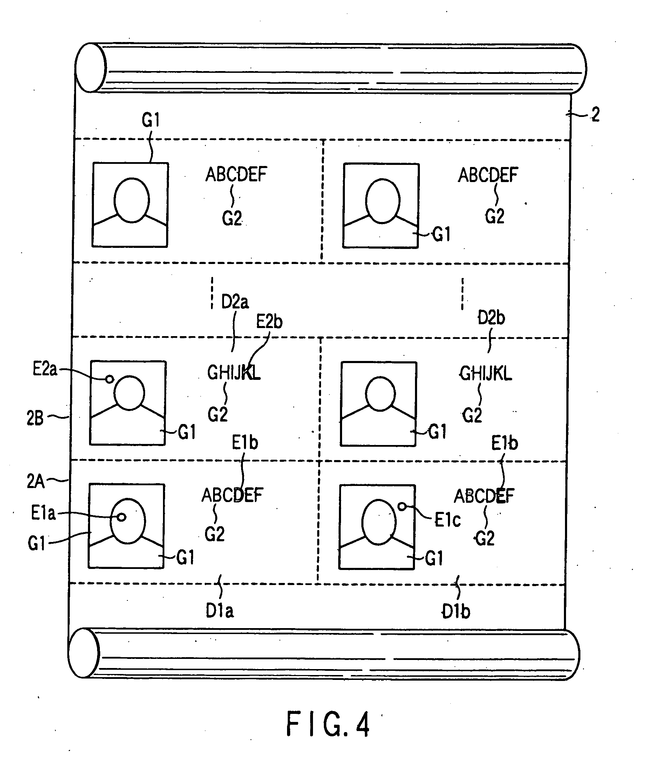

The host computer 26 transmits text data (e.g., personal data) and portrait data via the control unit 25 to the printing unit 3. In the printing unit 3, the thermal head 10 is heated in accordance with these data items. As shown in FIG. 4, ink is transferred from the ink ribbon 12 to the image-receiving layer in the first region 2A of the intermediate transfer-recording medium 2. As result, two images D1a and D1b that should be ideally identical, each consisting of portrait data G1 and text data G2, are printed side by side in the first region 2A of the intermediate transfer-recording medium 2.

In this embodiment, the identical images D1a and D1b are formed side by side as shown in FIG. 4. Instead, the images D1a and D1b may be arranged, one above the other in the lengthwise direction of the intermediate transfer-recording medium 2. In the embodiment, two identical images are formed in a region of the medium 2. Alternatively, three or more identical images may be formed in a region of the medium 2.

When the intermediate transfer-recording medium 2 runs, the two images D1a and D1b formed in the first region 2A of the medium 2 pass through the inspection unit 4. As the images D1a and D1b pass through the unit 4, one after the other, they are inspected for any defects. If images D1a and D1b have no defects, the transfer unit 5 transfers one of them (D1a or D1b), designated beforehand, from the first region 2A to a designated page of a brochure T transported to the transfer unit 5 and opened at the designated page.

In synchronism with, or not in synchronism with, the image transfer to the brochure T, the next two images D2a and D2b (FIG. 4) are printed in the second region 2B of the intermediate transfer-recording medium 2. Needless to say, these images D2a and D2b are represented by the same image data.

The inspection unit 4 inspects these images D2a and D2b for any defects. The image D2a may have defects E2a and E2b as shown in FIG. 4. In this case, the transfer unit 5 transfers the other image D2b, which has no defects, from the medium 2 to the designated page of the brochure T that has been transported to the transfer unit 5.

The two images D1a and D1b formed in the first region 2A may have defects E1a and E1b and defects E1c and E1d, respectively, as shown in FIG. 4. In this case, the transfer unit 5 transfers neither the image D1a nor the image D1b to the brochure T set in the transfer unit 5, and first region 2A is taken up around the take-up roller 23. The first region 2A of the intermediate transfer-recording medium 2 is wasted indeed. Nevertheless, the brochure T remains in the transfer unit 5 to have any image transferred from the second region 2B or any region following the second region 2B. Hence, the brochure T is never discarded.

As exemplified above, the images D1a and D1b Assume printed in the second region 2A are defective. Therefore, the image data representing the original of these images (hereinafter called original image data) is transmitted from the host computer 26 via the control unit 25 to the printing unit 3. The printing unit 3 prints two identical images, each represented by the original image data, in the next region 2C of the intermediate transfer-recording medium 2. If at least one of these images has no defects, that at least one image will be transferred from the region 2C to a brochure T at the transfer unit 5.

A method of inspecting any image printed on the medium 2 for defects will be explained as follows.

Assume that the region 2A of the intermediate transfer-recording medium 2, for example, passes through the inspection unit 4. In the inspection unit 4, the light source 15 applies light to the back of the medium 2. The light passes through the medium 2 and reflected by the reflector 16. The sensor 17 receives the light thus reflected and converts the light into image data. The image data is supplied to the CPU 28.

The image data may represent a color image defined by red (R), green (G) and blue (B) pixels, each represented by eight bits. Otherwise, the image data may be 8-bit gray data that represents a monochrome image, such as a fluorescent image or characters. The inspection-process unit 29 incorporated in the CPU 28 examines such 8-bit image data, determining whether the image represented by the image data has defects or not.

More specifically, the inspection-process unit 29 compares the two images D1a and D1b printed on the first region 2A. If the images D1a and D1b are color images, the R, G and B pixels values of the image D1a with the R, G and B pixels values of the image D1b. If the inspection-process unit 29 finds that the value difference between any pixel of the image D1a and the corresponding pixel of the image D1b exceeds a preset threshold, it will determine that one of the images thus compared has defects.

Image defects are, for example, dust existing on the medium 2, color-fading spots (including characters not printed) and stains. A method of detecting color-fading spots will be described. In most cases, a color image is formed of cyan-ink pixels, magenta-ink pixels and yellow-ink pixels. Suppose ink pixels of at least one color are not printed, a color-fading spot will develop. If a cyan-fading spot develops, its R-value will increase or its G and B values will decrease, because cyan, magenta and yellow are complementary to R, G and B, respectively.

Of the images D1a and D1b compared, one having a part with increased R-value (and with decreased G and B values) can be determined to have a color-fading spot. Whether an image has stains or defects resulting from dusts existing on the medium 2 can be determined in accordance with the difference between R, G and B pixels values of the image.

In the first embodiment described above, two identical images are printed on the intermediate transfer-recording medium 2 and are compared in units of pixels, thereby inspecting the images for any defects. Thus, each image can be examined, pixel by pixel. The first embodiment can therefore accomplish a high-precision inspection of images.

Second and third embodiments of the present invention will be described.

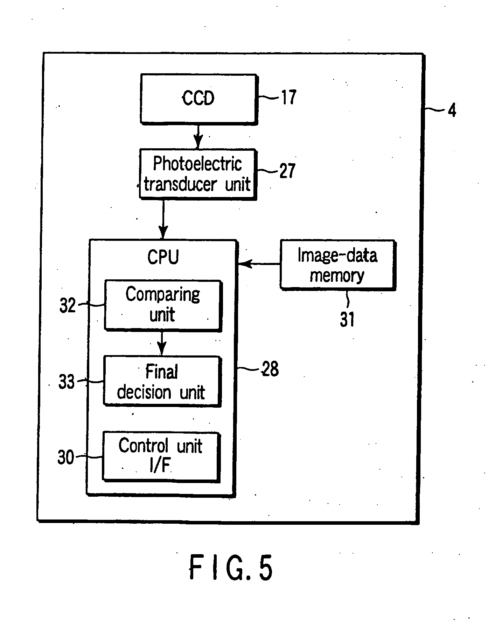

The second embodiment and the third embodiment differ from the first embodiment in that, as shown in FIG. 5, the inspection unit 4 has a comparing unit 32 and a final decision unit 33 (final decision means) in place of the inspection-process unit 29. In any other structural respects, they are identical to the first embodiment. Their components similar in function to those of the first embodiment will not be described in detail.

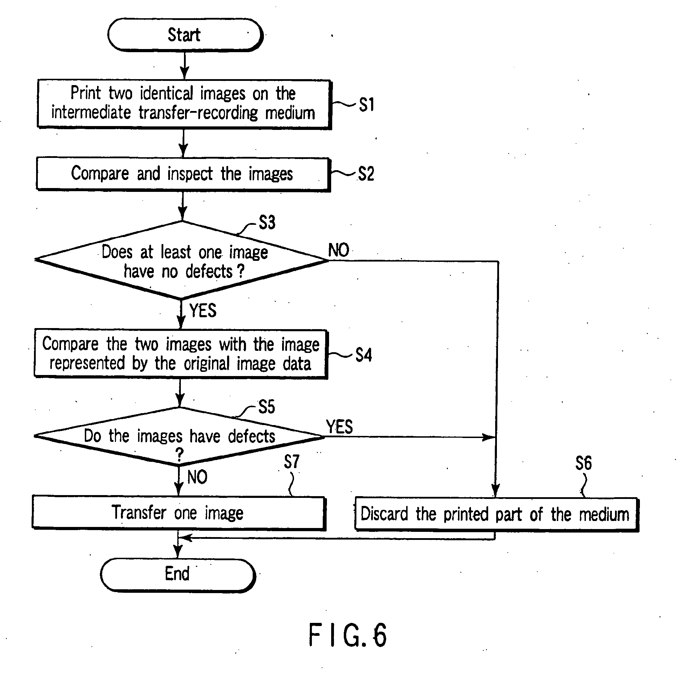

The image forming apparatus according to the second embodiment operates as will be explained with reference to the flowchart of FIG. 6.

In the image forming apparatus according to the second embodiment, the printing unit 3 receives original image data and prints two identical images, each represented by the original image data, on the intermediate transfer-recording medium 2, in the same way as in the first embodiment (Step 1). The comparing unit 32 of the inspection unit 4 compares the two images thus printed, pixel by pixel, thereby determining whether the images have defects or not (Step 2).

Then, the comparing unit 32 determines whether at least one of the images has no defects (Step S3). Even if YES in Step S3, said at least one image is not transferred to a brochure T, but is inspected again to determine whether it has no defects at all.

More specifically, the final decision unit 33 compares the two images, pixel by pixel, with the image represented by the original image data (Step S4). Since the original image data represents an image at the same resolution as the two images, the unit 33 can compares the images with the image represented by the original image data, pixel by pixel.

The final decision unit 33 then determines whether the two images have defects (Step S5). If YES in Step S5, that part of the medium 2, on which the images are printed, is discarded (Step S6) even if YES in Step S3. If NO in Step S5, the image fund to have no defects in Step S3 is transferred to the brochure T (Step S7).

Both images inspected by the inspection unit 4 may be found to have defects (NO in Step S3). In this case, too, the that part of the medium 2, on which the images are printed, is discarded (Step S6), and the images are printed again on the intermediate transfer-recording medium 2, by using the original image data.

As described above, the two images printed on the intermediate transfer-recording medium 2 are compared with the image represented by the original image data, in the second embodiment. This can reduces the possibility of detecting moles and blemishes, if any on a portrait, as image defects. That is, moles may be detected as image defects, depending on their sizes. Thus, the inspection unit 4 may determine a portrait of a person having moles, as a defective image. This is why the final decision unit 33 compares the two images formed on the medium 2, with the original image data that represents distinguishing features such as moles and skin blemishes, even if the comparing unit 32 has found that they have no defects. Therefore, the final decision unit 33 can detect a portrait of a person having moles and/or blemishes, as a flawless image.

In the second embodiment, the two identical images printed on the intermediate transfer-recording medium 2 are compared, pixel by pixel, for any defects they may have, and they are further compared with the image represented by the original image data. This pixel-by-pixel inspection of images can reliably detect defects, if any, in the images inspected.

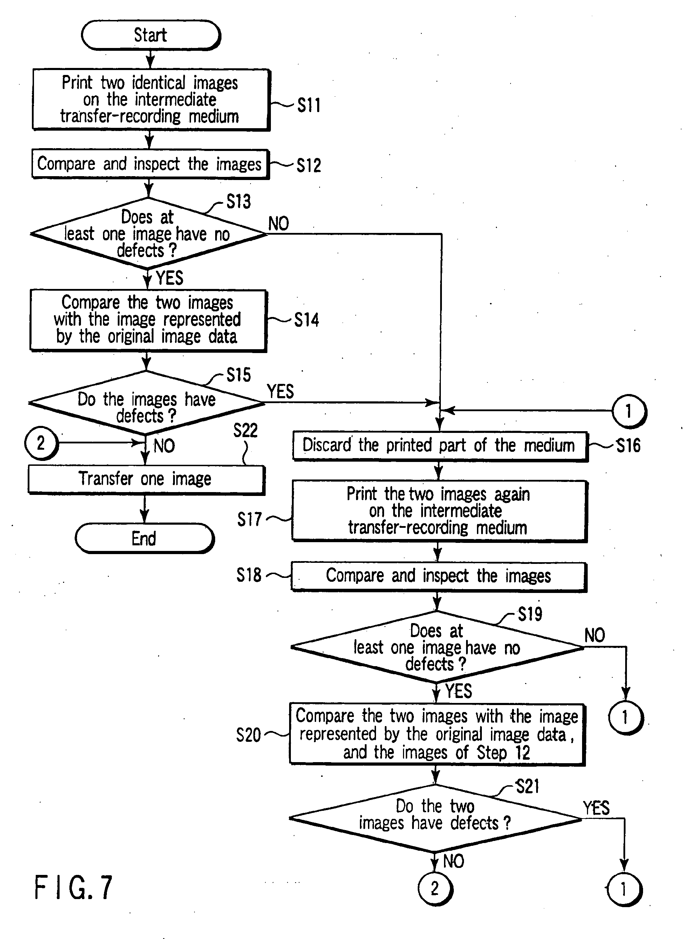

The image forming apparatus according to the third embodiment operates as will be explained with reference to the flowchart of FIG. 7.

As in the first and second embodiments, the printing unit 3 receives original image data and prints two identical images, each represented by the original image data, on the intermediate transfer-recording medium 2 (Step 11). The comparing unit 32 of the inspection unit 4 compares the two images thus printed, pixel by pixel, thereby determining whether the images have defects or not (Step 12).

Then, the comparing unit 32 determines whether at least one of the images has no defects (Step S13). Even if YES in Step S13, said at least one image is not transferred to a brochure T, but is inspected again to determine whether it has no defects at all.

More specifically, the final decision unit 33 compares the two images, pixel by pixel, with the image represented by the original image data (Step S14). Since the original image data represents an image at the same resolution as the two images, the unit 33 can compares the images with the image represented by the original image data, pixel by pixel.

The final decision unit 33 then determines both images differ from the image represented by the original image data (Step S15). If YES in Step S15, that is, if both images have defects, that part of the medium 2, on which the images are printed, is discarded (Step S16) even if YES in Step S13.

Then, the printing unit 3 prints the two images again on another region of the intermediate transfer-recording medium 2 (Step S17).

Next, the inspection unit 4 reads the two images printed again on the medium 2 and compares these images (Step S18).

The inspection unit 4 then determines whether at least one of the images has no defects (Step S19). If YES in Step S19, the inspection unit 4 compares the two images with the image represented by the original image data, in the same way as in Step 14 (Step S20). Further, the inspection unit 4 compares the two images read from the medium 2 in Step S12, with the two images printed again on the medium 2, thereby determining whether they have no defects at all (Step S21).

If NO in Step S21, that is, if at least one of the two images printed again have no defects, the image found to have no defects in Step S19 is printed to a brochure T (Step S22).

If both image are found to have defects in Step S13, or if both images printed again have defects in Step S19, or if both images are found finally to have defects in Step S21, the operation goes to Step S16. In Step S16, that part of the medium 2, on which the images are printed, is discarded. Thereafter, two images represented by the original vide data are printed again on the intermediate transfer-recording medium 2. In Step S15, at least one of the two images may be found to have no defects. In this case, the operation goes to Step S22, in which the image having no defects is transferred to the brochure T.

In the third embodiment, if the two images printed first are found to defects, they are printed again, and the two images printed for the first time are compared with the two images printed for the second time. Hence, the possibility of detecting distinguishing features as image defects can be more reduced than in the case where the two images are compared with only the image represented by the original image data. Thus, moles and skin blemishes, if any, can be more correctly detected than in the second embodiment.

In most cases, the R, G and B pixels values of the original image data differ from the R, G and B pixels values of the image data generated in the inspection unit 4. This is because the original image data is generated by a device (e.g., camera or scanner) and represent images of additive primaries, whereas any printed image is composed of cyan, magenta and yellow ink dots that pertain to subtractive primaries. Therefore, the original image data can never be exactly the same as the image data generated in the inspection unit 4, in terms of R, G and B pixels values.

Hence, small distinguishing features, such as moles and skin blemishes, existing in the image represented by the original image data may not be detected by comparing the image read from the medium 2 with only the image represented by the original image data. Nonetheless, the distinguishing features can be determined as such, not as image defects, if they are detected not only at the first inspection, but also at the first inspection.

## Claims

1. An image forming method **characterized by** comprising:
a printing step of printing at least two identical images on an intermediate transfer-recording medium (2), by using image data representing an image to be transferred to a final transfer-recording medium;
an inspecting step of inspecting the images printed on the intermediate transfer-recording medium (2) in the printing step, by reading and comparing the images, thereby to determine whether the images have defects; and
a transferring step of transferring an image found to have no defects in the inspecting step, from the intermediate transfer-recording medium (2) to the final transfer-recording medium (T).

2. The method according to claim 1, **characterized in that** in the printing step, two images represented by the image data are printed on the intermediate transfer-recording medium (2).

3. The method according to claim 2, **characterized in that** in the transferring step, either one of the two images is transferred from the intermediate transfer-recording medium (2) to the final transfer-recording medium (T) in the case where the two images are found to have no defects in the inspecting step.

4. The method according to claim 2, **characterized by** further comprising an extra printing step of printing two identical images, by using the image data, on another region of the intermediate transfer-recording medium (2) in the case where the two images are found to have defects in the inspecting step.

5. The method according to claim 2, **characterized by** further comprising a re-inspecting step of comparing the two image read in the inspecting step with an image represented by the image data, thereby to determine whether the two image have defects, in the case where at least one of the images is found to have no defects in the inspecting step, and **characterized in that** an image found to have no defects in the re-inspecting step is transferred from the intermediate transfer-recording medium (2) to the final transfer-recording medium (T).

6. The method according to claim 5, **characterized in that** in the transferring step, said at least one image found to have no defects in the inspecting step is transferred from the intermediate transfer-recording medium (2) to the final transfer-recording medium (T) in the case where the two images are found to have no defects in the re-inspecting step.

7. The method according to claim 5, **characterized by** further comprising an extra printing step of printing two identical images, by using the image data, on another region of the intermediate transfer-recording medium (2), in the case where the two images are found to have defects in the re-inspecting step.

8. An image forming method **characterized by** comprising:
a printing step of printing at least two identical images on an intermediate transfer-recording medium (2), by using image data representing an image, to be transferred to a final transfer-recording medium (T);
a first inspecting step of inspecting the two images printed on the intermediate transfer-recording medium (2) in the printing step, by reading the images from the intermediate transfer-recording medium (2) and comparing the images, thereby to determine whether the images have defects;
a second inspecting step of comparing the images to determine whether the images have defects, by comparing the two images read from the intermediate transfer-recording medium (2) in the first inspecting step, with an image represented by the image data, thereby to determine whether the tow images have defects, in the case where at least one image is found to have no defects in the first inspecting step;
an extra printing step of printing at lease two identical images, by using the image data, on another region of the intermediate transfer-recording medium (2), in the case where the two images are found to have defects in the second inspecting step;
a third inspecting step of reading and comparing the two images printed on the intermediate transfer-recording medium (2) in the extra printing step, thereby to determine whether the images have defects;
a fourth inspecting step of comparing the two images read from the intermediate transfer-recording medium (2) in the third inspecting step, with the image represented by the image data, in the case where at lease one image is found to have no defects in the third inspecting step, and then comparing the two images read from the intermediate transfer-recording medium (2) in the first inspecting step, with the two images read from the intermediate transfer-recording medium (2) in the third inspecting step, thereby to determine whether the two images read in the third inspecting step have detects; and
a transferring step of transferring an image found to have no defects in the fourth inspecting step, from the intermediate transfer-recording medium (2) to the final transfer-recording medium (T).

9. The method according to claim 8, **characterized in that** in the transferring step, either one of the two images is transferred from the intermediate transfer-recording medium to the final transfer-recording medium in the case where the two images are found to have no defects in the fourth inspecting step.

10. An image forming apparatus **characterized by** comprising:
printing means (3) adapted to print at least two identical images on an intermediate transfer-recording medium (2), by using image data representing an image to be transferred to a final transfer-recording medium;
inspecting means (4) for inspecting the at least two identical images printed on the intermediate transfer-recording medium (2) by the printing means (3), by reading and comparing the at least two identical images thereby to determine whether the images have defects; and
transferring means (5) for transferring an image found to have no defects by the inspecting means (4), from the intermediate transfer-recording medium (2) to the final transfer-recording medium (T).

11. The apparatus according to claim 10, **characterized in that** the printing means (3) is adapted to print two identical images represented by the image data on the intermediate transfer-recording medium (2).

12. The apparatus according to claim 10, **characterized in that** the transferring means (5) is adapted to transfer either one of two identical images from the intermediate transfer-recording medium (2) to the final transfer-recording medium (T) in the case where the inspecting means (4) determines that the two identical images have no defects.

13. The method according to claim 11, **characterized by** further comprising a controller (25) adapted to cause the printing means (3) to print at least two further identical images, by using the image data, on another region of the intermediate transfer-recording medium (2), in the case where the inspecting means (4) determines that the two identical images have defects.

14. The apparatus according to claim 11, **characterized by** further comprising re-inspecting means (33) for comparing the two identical images read by the inspecting means (4), with an image represented by the image data, thereby to determine whether at least one identical image has defects, in the case where the inspecting means (4) determines that at least one identical image has no defects, and **characterized in that** the transferring means (5) is adapted to transfer an identical image found to have no defects from the intermediate transfer-recording medium (2) to the final transfer-recording medium (T).

15. The apparatus according to claim 14, **characterized in that** the transferring means (5) is adapted to transfer one of the two identical images which are found to have no defects in the inspecting means (4), from the intermediate transfer-recording medium (2) to the final transfer-recording medium (T), in the case where the re-inspecting (33) determines that the two identical images have no defects.

16. The apparatus according to claim 14, **characterized by** further comprising a controller (25) adapted to cause the printing means (3) to print at least two further identical images, by using the image data, on another region of the intermediate transfer-recording medium (2), in the case where the re-inspecting means (33) determines that the two identical images have defects.

## Patentansprüche

1. Bilderzeugungsverfahren, **gekennzeichnet durch** Umfassen:
einen Druckschritt des Druckens von mindestens zwei identischen Bildern auf ein Zwischen-Transferaufnahmemedium (2), **durch** Verwenden von Bilddaten, die ein Bild, das auf ein End-Transferaufnahmemedium transferiert werden soll, darstellen;
einen Prüfschritt des Prüfens der Bilder, die auf das Zwischen-Transferaufnahmemedium (2) in dem Druckschritt gedruckt werden, **durch** Lesen und Vergleichen der Bilder, um **dadurch** zu bestimmen, ob die Bilder Defekte aufweisen; und
einen Transferschritt des Transferierens eines Bildes, von dem im Prüfschritt herausgefunden wird, dass es keine Fehler hat, von dem Zwischen-Transferaufnahmemedium (2) zu dem End-Transferaufnahmemedium (T).

2. Verfahren nach Anspruch 1, **dadurch gekennzeichnet, dass** in dem Druckschritt zwei Bilder, die durch die Bilddaten dargestellt werden, auf das Zwischen-Transferaufnahmemedium (2) gedruckt werden.

3. Verfahren nach Anspruch 2, **dadurch gekennzeichnet, dass** in dem Transferschritt eines der zwei Bilder von dem Zwischen-Transferaufnahmemedium (2) zu dem End-Transferaufnahmemedium (T) transferiert wird, in dem Fall, in dem, in dem Prüfschritt, herausgefunden wird, dass die zwei Bilder keine Defekte aufzuweisen.

4. Verfahren nach Anspruch 2, **gekennzeichnet durch** ferner Umfassen eines Extra-Druckschritts des Druckens zweier identischer Bilder, **durch** verwenden der Bilddaten, auf einen anderen Bereich des Zwischen-Transferaufnahmemediums (2), in dem Fall, in dem, in dem Prüfschritt, herausgefunden wird, dass die zwei Bilder Defekte aufweisen.

5. Verfahren nach Anspruch 2, **gekennzeichnet durch** ferner Umfassen eines Wieder-Prüfschritts des Vergleichens der zwei Bilder, die in dem Prüfschritt gelesen werden, mit einem Bild, das **durch** die Bilddaten dargestellt wird, um dadurch zu bestimmen, ob die zwei Bilder Defekte aufweisen, in dem Fall, in dem, in dem Prüfschritt, herausgefunden wird, dass mindestens eines der Bilder keine Defekte aufweist, und **dadurch gekennzeichnet, dass** ein Bild, von dem in dem Wieder-Prüfschritt herausgefunden wird, dass es keine Defekte aufweist, von dem Zwischen-Transferaufnahmemedium (2) zu dem End-Transferaufnahmemedium (T) transferiert wird.

6. Verfahren nach Anspruch 5, **dadurch gekennzeichnet, dass**, in dem Transferschritt, das mindestens eine Bild, von dem in dem Prüfschritt herausgefunden wird, dass es keine Defekte aufweist, von dem Zwischen-Transferaufnahmemedium (2) zu dem End-Transferaufnahmemedium (T) transferiert wird, in dem Fall, in dem, in dem Wieder-Prüfschritt, herausgefunden wird, dass die zwei Bilder keine Defekte aufweisen.

7. Verfahren nach Anspruch 5, **gekennzeichnet durch** ferner Umfassen eines Extra-Druckschritts des Druckens zweier identischer Bilder, **durch** Verwenden der Bilddaten, auf einen anderen Bereich des Zwischen-Transferaufnahmemediums (2), in dem Fall, in dem, in dem Wieder-Prüfschritt, herausgefunden wird, dass die zwei Bilder keine Defekte aufweisen.

8. Bilderzeugungsverfahren, **gekennzeichnet durch** Umfassen:
einen Druckschritt des Druckens von mindesten zwei identischen Bildern auf ein Zwischen-Transferaufnahmemedium (2), **durch** Verwenden von Bilddaten, die ein Bild, das auf ein End-Transferaufnahmemedium (T) transferiert werden soll, darstellen;
einen erste Prüfschritt des Prüfens der zwei Bilder, die auf das Zwischen-Transferaufnahmemedium (2) in dem Druckschritt gedruckt werden, **durch** Lesen der Bilder von dem Zwischen-Transferaufnahmemedium (2) und Vergleichen der Bilder, um **dadurch** zu bestimmen, ob die Bilder Defekte aufweisen;
einen zweiten Prüfschritt des Vergleichens der Bilder, um zu bestimmen, ob die Bilder Defekte aufweisen, **durch** Vergleichen der zwei Bilder, die von dem Zwischen-Transferaufnahmemedium (2) in dem ersten Prüfschritt gelesen werden, mit einem Bild, das **durch** die Bilddaten dargestellt wird, um **dadurch** zu bestimmen, ob die zwei Bilder Defekte aufweisen, in dem Fall, in dem, in dem ersten Prüfschritt, von mindestens einem Bild herausgefunden wird, dass es keine Defekte aufweist;
einen Extra-Druckschritt des Druckens von mindestens zwei identischen Bildern, **durch** Verwenden der Bilddaten, auf einen anderen Bereich des Zwischen-Transferaufnahmemediums (2), in dem Fall, in dem, in dem zweiten Prüfschritt, herausgefunden wird, dass die zwei Bilder Defekte aufweisen;
einen dritten Prüfschritt des Lesens und Vergleichens der zwei Bilder, die auf das Zwischen-Transferaufnahmemedium (2) in dem Extra-Druckschritt gedruckt werden, um **dadurch** zu bestimmen, ob die Bilder Defekte aufweisen;
einen vierten Prüfschritt des Vergleichens der zwei Bilder, die von dem Zwischen-Transferaufnahmemedium (2) in dem dritten Prüfschritt gelesen werden, mit dem Bild, das **durch** die Bilddaten dargestellt wird, in dem Fall, in dem von mindestens ein Bild, in dem dritten Prüfschritt, herausgefunden wird, dass es keine Defekte aufweist, und dann Vergleichen der zwei Bilder, die von dem Zwischen-Transferaufnahmemedium (2) in dem ersten Prüfschritt gelesen werden, mit den zwei Bildern, die von dem Zwischen-Transferaufnahmemedium (2) in dem dritten Prüfschritt gelesen werden, um **dadurch** zu bestimmen, ob die zwei Bilder, die in dem dritten Prüfschritt gelesen werden, Defekte aufweisen; und
einen Transferschritt des Transferierens eines Bildes, von dem in dem vierten Prüfschritt herausgefunden wird, dass es keine Defekte aufweist, von dem Zwischen-Transferaufnahmemedium (2) zu dem End-Transferaufnahmemedium (T).

9. Verfahren nach Anspruch 8, **dadurch gekennzeichnet**, das in dem Transferschritt eines der zwei Bilder von dem Zwischen-Transferaufnahmemedium zu dem End-Transferaufnahmemedium transferiert wird, in dem Fall, in dem, in dem vierten Prüfschritt, herausgefunden wird, dass die zwei Bilder keine Defekte aufweisen.

10. Bilderzeugungsvorrichtung, **gekennzeichnet durch** Umfassen:
Druckmittel (3) angepasst, um mindestens zwei identische Bilder auf ein Zwischen-Transferaufnahmemedium (2) zu drucken, **durch** Verwenden von Bilddaten, die ein Bild, das auf ein End-Transferaufnahmemedium transferiert werden soll, darstellen;
Prüfmittel (4) zum Prüfen der mindestens zwei identischen Bilder, die auf das Zwischen-Transferaufnahmemedium (2) **durch** das Druckmittel (3) gedruckt werden, **durch** Lesen und Vergleichen der mindestens zwei identischen Bilder, um **dadurch** zu bestimmen, ob die Bilder Defekte aufweisen; und
Transfermittel (5) zum Transferieren eines Bildes, von dem **durch** die Prüfmittel (4) herausgefunden wird, dass es keine Defekte aufweist, von dem Zwischen-Transferaufnahmemedium (2) zu dem End-Transferaufnahmemedium (T).

11. Vorrichtung nach Anspruch 10, **dadurch gekennzeichnet, dass** das Druckmittel (3) angepasst ist, um zwei identische Bilder, die durch die Bilddaten dargestellt werden, auf das Zwischen-Transferaufnahmemedium (2) zu drucken.

12. Vorrichtung nach Anspruch 10, **dadurch gekennzeichnet, dass** das Transfermittel (5) angepasst ist, um eines der zwei identischen Bilder von dem Zwischen-Transferaufnahmemedium (2) zu dem End-Transferaufnahmemedium (T) zu transferieren, in dem Fall, in dem das Prüfmittel (4) bestimmt, dass die zwei identischen Bilder keine Defekte aufweisen.

13. Verfahren nach Anspruch 11, **gekennzeichnet durch** ferner Umfassen eines Controllers (25), der angepasst ist, um zu bewirken, dass das Druckmittel (3) mindestens zwei weitere identische Bilder, **durch** Verwenden der Bilddaten, auf einen anderen Bereich des Zwischen-Transferaufnahmemediums (2) druckt, in dem Fall, in dem das Prüfmittel (4) bestimmt, dass die zwei identischen Bilder Defekte aufweisen.

14. Vorrichtung nach Anspruch 11, **gekennzeichnet durch** ferner Umfassen eines Wieder-Prüfmittels (33) zum Vergleichen der zwei identischen Bilder, die von dem Prüfmittel (4) gelesen werden, mit einem Bild, das **durch** die Bilddaten dargestellt wird, um **dadurch** zu bestimmen, ob mindestens ein identisches Bild Defekte aufweist, in dem Fall, in dem das Prüfmittel (4) bestimmt, dass mindestens ein identisches Bild keine Defekte aufweist, und **dadurch gekennzeichnet, dass** das Transfermittel (5) angepasst ist, um ein identisches Bild, von dem herausgefunden wird, dass es keine Defekte aufweist, von dem Zwischen-Transferaufnahmemedium (2) zu dem End-Transferaufnahmemedium (T) zu transferieren.

15. Vorrichtung nach Anspruch 14, **dadurch gekennzeichnet, dass** das Transfermittel (5) angepasst ist, um eines der zwei identischen Bilder, von denen, in dem Prüfmittel (4), herausgefunden wird, dass sie keine Defekte aufweisen, von dem Zwischen-Transferaufnahmemedium (2) zu dem End-Transferaufnahmemedium (T) zu transferieren, in dem Fall, in dem das Wieder-Prüfmittel (33) bestimmt, dass die zwei identischen Bilder keine Defekte aufweisen.

16. Vorrichtung nach Anspruch 14, **gekennzeichnet durch** ferner Umfassen eines Controllers (25), der angepasst ist, um zu bewirken, dass das Druckmittel (3) mindestens zwei weitere identische Bilder, **durch** Verwenden der Bilddaten, auf einen anderen Bereich des Zwischen-Transferaufnahmemediums (2) druckt, in dem Fall, in dem das Wieder-Prüfmittel (33) bestimmt, dass die zwei identischen Bilder Defekte aufweisen.

## Revendications

1. Procédé de formation d'image, **caractérisé en ce qu'**il comprend :
une étape d'impression pour imprimer au moins deux images identiques sur un support d'enregistrement par transfert intermédiaire (2), en utilisant des données d'image représentant une image à transférer sur un support d'enregistrement par transfert final ;
une étape d'inspection pour inspecter les images imprimées sur le support d'enregistrement par transfert intermédiaire (2) à l'étape d'impression, en lisant et en comparant les images, pour déterminer de ce fait si les images présentent des défauts ; et
une étape de transfert pour transférer une image s'avérant ne présenter aucun défaut à l'étape d'inspection, du support d'enregistrement par transfert intermédiaire (2) sur le support d'enregistrement par transfert final (T).

2. Procédé selon la revendication 1, **caractérisé en ce que**, à l'étape d'impression, deux images représentées par les données d'image sont imprimées sur le support d'enregistrement par transfert intermédiaire (2).

3. Procédé selon la revendication 2, **caractérisé en ce que**, à l'étape de transfert, l'une ou l'autre des deux images est transférée du support d'enregistrement par transfert intermédiaire (2) sur le support d'enregistrement par transfert final (T) dans le cas où les deux images s'avèrent ne présenter aucun défaut à l'étape d'inspection.

4. Procédé selon la revendication 2, **caractérisé en ce qu'**il comprend en outre une étape d'impression supplémentaire pour imprimer deux images identiques, en utilisant les données d'image, sur une autre région du support d'enregistrement par transfert intermédiaire (2) dans le cas où les deux images s'avèrent présenter des défauts à l'étape d'inspection.

5. Procédé selon la revendication 2, **caractérisé en ce qu'**il comprend en outre une étape de réinspection pour comparer les deux images lues à l'étape d'inspection avec une image représentée par les données d'image, pour déterminer de ce fait si les deux images présentent des défauts, dans le cas où au moins l'une des images s'avère ne présenter aucun défaut à l'étape d'inspection, et **caractérisé en ce qu'**une image qui s'avère ne présenter aucun défaut à l'étape de réinspection est transférée du support d'enregistrement par transfert intermédiaire (2) sur le support d'enregistrement par transfert final (T).

6. Procédé selon la revendication 5, **caractérisé en ce que**, à l'étape de transfert, ladite au moins une image qui s'est avérée ne présenter aucun défaut à l'étape d'inspection est transférée du support d'enregistrement par transfert intermédiaire (2) sur le support d'enregistrement par transfert final (T) dans le cas où les deux images s'avèrent ne présenter aucun défaut à l'étape de réinspection.

7. Procédé selon la revendication 5, **caractérisé en ce qu'**il comprend en outre une étape d'impression supplémentaire pour imprimer deux images identiques, en utilisant les données d'image, sur une autre région du support d'enregistrement par transfert intermédiaire (2), dans le cas où les deux images s'avèrent présenter des défauts à l'étape de réinspection.

8. Procédé de formation d'image, **caractérisé en ce qu'**il comprend :
une étape d'impression pour imprimer au moins deux images identiques sur un support d'enregistrement par transfert intermédiaire (2), en utilisant des données d'image représentant une image à transférer sur un support d'enregistrement par transfert final (T) ;
une première étape d'inspection pour inspecter les deux images imprimées sur le support d'enregistrement par transfert intermédiaire (2) à l'étape d'impression, en lisant les images sur le support d'enregistrement par transfert intermédiaire (2) et en comparant les images, pour déterminer de ce fait si les images présentent des défauts ;
une deuxième étape d'inspection pour comparer les images pour déterminer si les images présentent des défauts, en comparant les deux images lues sur le support d'enregistrement par transfert intermédiaire (2) à la première étape d'inspection, avec une image représentée par les données d'image, pour déterminer de ce fait si les deux images présentent des défauts, dans le cas où au moins une image s'avère ne présenter aucun défaut à la première étape d'inspection ;
une étape d'impression supplémentaire pour imprimer au moins deux images identiques, en utilisant les données d'image, sur une autre région du support d'enregistrement par transfert intermédiaire (2), dans le cas où les deux images s'avèrent présenter des défauts à la deuxième étape d'inspection ;
une troisième étape d'inspection pour lire et comparer les deux images imprimées sur le support d'enregistrement par transfert intermédiaire (2) à l'étape d'impression supplémentaire, pour déterminer de ce fait si les images présentent des défauts ;
une quatrième étape d'inspection pour comparer les deux images lues sur le support d'enregistrement par transfert intermédiaire (2) à la troisième étape d'inspection, avec l'image représentée par les données d'image, dans le cas où au moins une image s'avère ne présenter aucun défaut à la troisième étape d'inspection, et comparer ensuite les deux images lues sur le support d'enregistrement par transfert intermédiaire (2) à la première étape d'inspection, avec les deux images lues sur le support d'enregistrement par transfert intermédiaire (2) à la troisième étape d'inspection, pour déterminer de ce fait si les deux images lues à la troisième étape d'inspection présentent des défauts ; et
une étape de transfert pour transférer une image qui s'avère ne présenter aucun défaut à la quatrième étape d'inspection, du support d'enregistrement par transfert intermédiaire (2) sur le support d'enregistrement par transfert final (T).

9. Procédé selon la revendication 8, **caractérisé en ce que**, à l'étape de transfert, l'une ou l'autre des deux images est transférée du support d'enregistrement par transfert intermédiaire sur le support d'enregistrement par transfert final dans le cas où les deux images s'avèrent ne présenter aucun défaut à la quatrième étape d'inspection.

10. Appareil de formation d'image, **caractérisé en ce qu'**il comprend :
des moyens d'impression (3) adaptés pour imprimer au moins deux images identiques sur un support d'enregistrement par transfert intermédiaire (2), en utilisant des données d'image représentant une image à transférer sur un support d'enregistrement par transfert final ;
des moyens d'inspection (4) pour inspecter lesdites au moins deux images identiques imprimées sur le support d'enregistrement par transfert intermédiaire (2) par les moyens d'impression (3), en lisant et en comparant lesdites au moins deux images identiques pour déterminer de ce fait si les images présentent des défauts ; et
des moyens de transfert (5) pour transférer une image s'avérant ne présenter aucun défaut pour les moyens d'inspection (4), du support d'enregistrement par transfert intermédiaire (2) sur le support d'enregistrement par transfert final (T).

11. Appareil selon la revendication 10, **caractérisé en ce que** les moyens d'impression (3) sont adaptés pour imprimer deux images identiques représentées par les données d'image sur le support d'enregistrement par transfert intermédiaire (2).

12. Appareil selon la revendication 10, **caractérisé en ce que** les moyens de transfert (5) sont adaptés pour transférer l'une ou l'autre des deux images identiques du support d'enregistrement par transfert intermédiaire (2) sur le support d'enregistrement par transfert final (T) dans le cas où les moyens d'inspection (4) déterminent que les deux images identiques ne présentent aucun défaut.

13. Appareil selon la revendication 11, **caractérisé en ce qu'**il comprend en outre un contrôleur (25) adapté pour amener les moyens d'impression (3) à imprimer au moins deux autres images identiques, en utilisant les données d'image, sur une autre région du support d'enregistrement par transfert intermédiaire (2), dans le cas où les moyens d'inspection (4) déterminent que les deux images identiques présentent des défauts.

14. Appareil selon la revendication 11, **caractérisé en ce qu'**il comprend en outre des moyens de réinspection (33) pour comparer les deux images identiques lues par les moyens d'inspection (4), avec une image représentée par les données d'image, pour déterminer de ce fait si au moins une image identique présente des défauts, dans le cas où les moyens d'inspection (4) déterminent qu'au moins une image identique ne présente aucun défaut, et **caractérisé en ce que** les moyens de transfert (5) sont adaptés pour transférer une image identique s'avérant ne présenter aucun défaut du support d'enregistrement par transfert intermédiaire (2) sur le support d'enregistrement par transfert final (T).

15. Appareil selon la revendication 14, **caractérisé en ce que** les moyens de transfert (5) sont adaptés pour transférer l'une des deux images identiques qui s'avèrent ne présenter aucun défaut dans les moyens d'inspection (4), du support d'enregistrement par transfert intermédiaire (2) sur le support d'enregistrement par transfert final (T), dans le cas où les moyens de réinspection (33) déterminent que les deux images identiques ne présentent aucun défaut.

16. Appareil selon la revendication 14, **caractérisé en ce qu'**il comprend en outre un contrôleur (25) adapté pour amener les moyens d'impression (3) à imprimer au moins deux autres images identiques, en utilisant les données d'image, sur une autre région du support d'enregistrement par transfert intermédiaire (2), dans le cas où les moyens de réinspection (33) déterminent que les deux images identiques présentent des défauts.
